# EUROPEAN PATENT APPLICATION

(11) **EP 4 693 135 A1**
(43) Date of publication of application: **11.02.2026**
(21) Application number: 25195012.7
(22) Date of filing: 08.08.2025
(51) Int. Cl.: G06Q 10/107, H04L 51/224

(54) **SYSTEMS AND METHODS FOR PULL NOTIFICATIONS AND INTERACTING ON BOTH WEB AND MOBILE CHANNELS**

(30) Priority: 09.08.2024 US 202463681485 P
(71) Applicant: JPMorgan Chase Bank, N.A., New York, NY 10179 (US)
(72) Inventor: Banala, Sandeep Reddy, 383 Madison Avenue, 10179 (US); More, Bipin, 383 Madison Avenue, 10179 (US); Madhavan, Suresh, 383 Madison Avenue, 10179 (US); Ahuja, Dipti, 383 Madison Avenue, 10179 (US); Loncaric, Goran, 383 Madison Avenue, 10179 (US); Gean, Gerardo, 383 Madison Avenue, 10179 (US); SHORROSH, Maurice, 383 Madison Avenue, 10179 (US)
(74) Representative: Patentanwälte Olbricht Buchhold Keulertz

(57) **Abstract**

A method may include: receiving, by a backend computer program and from a service provider system, a message for customer; storing, by the backend computer program, the message with a message identifier for the message; marking, by the backend computer program, a customer electronic device associated with the customer to receive the message on a next customer login on the customer electronic device; receiving, by the backend computer program and from a mobile application or a browser executed by the customer electronic device, a login from the customer; authenticating, by the backend computer program, the customer; confirming, by the backend computer program, that the customer electronic device is marked; and providing, by the backend computer program, the message identifier to the mobile application or the browser; wherein the mobile application or the browser may be configured to retrieve the message using the message identifier and to display the message.

## Description

### RELATED APPLICATIONS

This application claims priority to, and the benefit of, U.S. Provisional Patent Application Ser. No. 63/681,485, filed August 9, 2024, the disclosure of which is hereby incorporated, by reference, in its entirety.

### BACKGROUND OF THE INVENTION

### 1. Field of the Invention

Embodiments relate to systems and methods for pull notifications and interacting on both web and mobile channels.

### 2. Description of the Related Art

Service providers, such as financial institutions, often provide messages to their customers via push notifications on customer mobile electronic devices. Customers, however, can intentionally or unintentionally disable push notifications, which can result in the customer missing critical messages, such as real-time fraud prevention messages.

### SUMMARY OF THE INVENTION

Systems and methods for pull notifications and interacting on both web and mobile channels are disclosed. In one embodiment, a method may include: receiving, by a backend computer program and from a service provider system, a message for customer; storing, by the backend computer program, the message with a message identifier for the message; marking, by the backend computer program, a customer electronic device associated with the customer to receive the message on a next customer login on the customer electronic device; receiving, by the backend computer program and from a mobile application or a browser executed by the customer electronic device, a login from the customer; authenticating, by the backend computer program, the customer; confirming, by the backend computer program, that the customer electronic device is marked; and providing, by the backend computer program, the message identifier to the mobile application or the browser; wherein the mobile application or the browser may be configured to retrieve the message using the message identifier and to display the message.

In one embodiment, the customer electronic device has a push notification feature disabled.

In one embodiment, the customer electronic device may be registered to the customer with the backend computer program.

In one embodiment, a plurality of customer electronic devices that are registered to the customer are marked.

In one embodiment, the method may also include receiving, by the backend computer program and from the mobile application or the browser, a response to the message; and executing, by the backend computer program, an action in response to receiving the response to the message.

In one embodiment, the response may include approving a transaction, and the action may include authorizing a transaction associated with the message.

In one embodiment, the response may include authentication information, and the action may include executing step-up authentication using the authentication information.

In one embodiment, the response may include an identification document, and the action may include verifying an identity of the customer.

According to another embodiment, a system may include: a customer electronic device associated with a customer executing a browser and a mobile application; a backend computer program executing a backend computer program; and a service provider system. The service provider system may be configured to generate a message for the customer and to provide the message to the backend computer program; the backend computer program may be configured to store the message with a message identifier for the message; the backend computer program may be configured to mark the customer electronic device associated with the customer to receive the message on a next customer login on the customer electronic device; the backend computer program may be configured to receive a login from the mobile application executed by the customer electronic device; the backend computer program may be configured to authenticate the customer; the backend computer program may be configured to confirm that the customer electronic device is marked; the backend computer program may be configured to provide the message identifier to the mobile application; and the mobile application may be configured to retrieve the message using the message identifier and to display the message.

In one embodiment, the customer electronic device has a push notification feature disabled.

In one embodiment, the customer electronic device may be registered to the customer with the backend computer program.

In one embodiment, the backend computer program may be configured to receive a response to the message from the mobile application or the browser; and the backend computer program may be configured to execute an action in response to receiving the response to the message.

In one embodiment, the response may include approving a transaction, and the action may include authorizing a transaction associated with the message.

In one embodiment, the response may include authentication information, and the action may include executing step-up authentication using the authentication information.

In one embodiment, the response may include an identification document, and the action may include verifying an identity of the customer.

According to another embodiment a non-transitory computer readable storage medium may including instructions stored thereon, which when read and executed by one or more computer processors, cause the one or more computer processors to perform steps comprising: receiving, from a service provider system, a message for customer; storing the message with a message identifier for the message; marking a customer electronic device that is registered to the customer to receive the message on a next customer login on the customer electronic device, wherein the customer electronic device has a push notification feature disabled; receiving, from a mobile application or a browser executed by the customer electronic device, a login from the customer; authenticating the customer; confirming that the customer electronic device is marked; and providing the message identifier to the mobile application or the browser; wherein the mobile application or the browser may be configured to retrieve the message using the message identifier and to display the message.

In one embodiment, the non-transitory computer readable storage medium may also include instructions stored thereon, which when read and executed by the one or more computer processors, cause the one or more computer processors to perform steps comprising: receiving, from the mobile application or the browser, a response to the message; and executing an action in response to receiving the response to the message.

In one embodiment, the response may include approving a transaction, and the action may include authorizing a transaction associated with the message.

In one embodiment, the response may include authentication information, and the action may include executing step-up authentication using the authentication information.

In one embodiment, the response may include an identification document, and the action may include verifying an identity of the customer.

### BRIEF DESCRIPTION OF THE DRAWINGS

For a more complete understanding of the present invention, the objects and advantages thereof, reference is now made to the following descriptions taken in connection with the accompanying drawings in which:
Figure 1 illustrates a system for pull notifications and interacting on both web and mobile channels according to an embodiment;
Figure 2 depicts a method for pull notifications and interacting on both web and mobile channels according to an embodiment;
Figures 3A and 3B depict a method for pull notifications and interacting on both web and mobile channels according to an embodiment;
Figure 4 depicts an exemplary computing system for implementing aspects of the present disclosure.

### DETAILED DESCRIPTION OF PREFERRED EMBODIMENTS

Embodiments relate to systems and methods for pull notifications and interacting on both web and mobile channels. In embodiments, customers may be notified with active notifications, and are able to interact with notifications. Further, customers may be notified with one-time codes and may log in, cross-channel, without using an external vendor.

Embodiments may provide a generic component that displays any messages to customers during login and may capture and/or publish user actions.

Embodiments provide a solution for providing messages to customers when the push message feature is on a mobile device is disabled. Thus, the customer may still receive messages even when this feature is disabled.

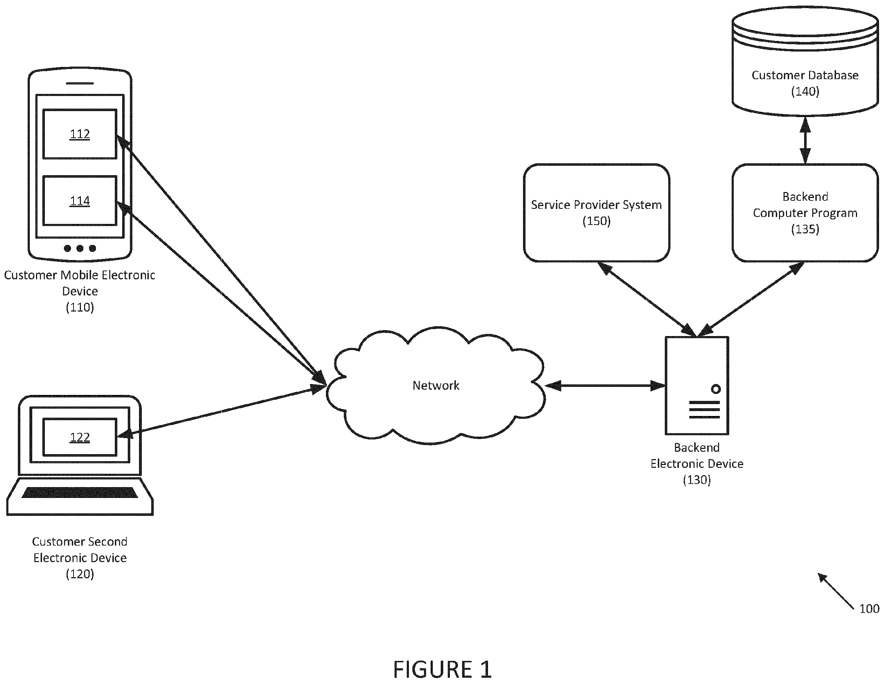

Referring to Figure 1, a system for pull notifications and interacting on both web and mobile channels is disclosed according to an embodiment. System 100 may include customer mobile electronic device 110, which may be a mobile electronic device that is registered with a backend for a service provider, such as a financial institution, and executes mobile application 114. It may also execute browser 112. Examples of customer mobile electronic device 110 may include computers, smart devices (e.g., smart phones, smart watches, etc.), Internet of Things (IoT) appliances, etc.

System 100 may also include customer second electronic device 120, which may be a computer, a smart device (e.g., smart phones, smart watches, etc.), an Internet of Things (IoT) appliance, etc. Customer second electronic device 120 may execute browser 122.

Customer mobile electronic device 110 and customer second electronic device 120 may interface with backend computer program 135 executed by backend electronic device 130, such as a server (e.g., physical and/or cloud-based). Backend computer program 135 may also interface with customer database 140, which may store information regarding customer mobile electronic device 110, such as a customer identifier, a device identifier, a credential identifier, etc.

The customer may interact with service provider system(s) 150 via customer mobile electronic device 110 and/or customer second electronic device 120. For example, service provider system 150 may include payment systems, fraud systems, authentication systems, a partner merchant, etc. When interacting with service provider system(s) 150, service provider system(s) 150 may determine that it is necessary to communicate a message to the customer, to have the customer verify that the customer is in possession of customer mobile electronic device 110, to have the customer authenticate to customer mobile electronic device 110, etc. Examples of messages may include transaction confirmations, document availability, to request customer verification based on the known customer electronic device, etc.

When a customer logs in to mobile application 114, backend computer program 135 may check to determine if there are any messages for the customer. For example, backend computer program 135 may check to see if customer mobile electronic device 110 is marked to receive the message.

Once the backend computer program 135 determines that the customer mobile electronic device 110 has a certain level of trust (e.g., the customer is authenticated), it may present the message to the customer using mobile application 114. It may also provide any messages to the service provider agent (not shown) or similar to let the service provider agent know that the customer has been verified.

It may also provide a message to the customer via mobile application 114, or via browser 112 or 122, that the customer is interacting with a service provider agent.

In another embodiment, a service provider agent (not shown) may request that the customer log in to mobile application 114 for verification purposes. This may be done based on an in-person interaction, a phone interaction, etc. For example, in order to verify that the customer is actually calling in to a service provider agent, the service provider agent may cause backend computer program 135 to mark customer electronic device 110 and to store a message for retrieval by mobile application 114. The service provider agent may then instruct the customer to log into mobile application 114, and, if customer electronic device 110 is marked, mobile application 114 may retrieve the message and may take any subsequent actions.

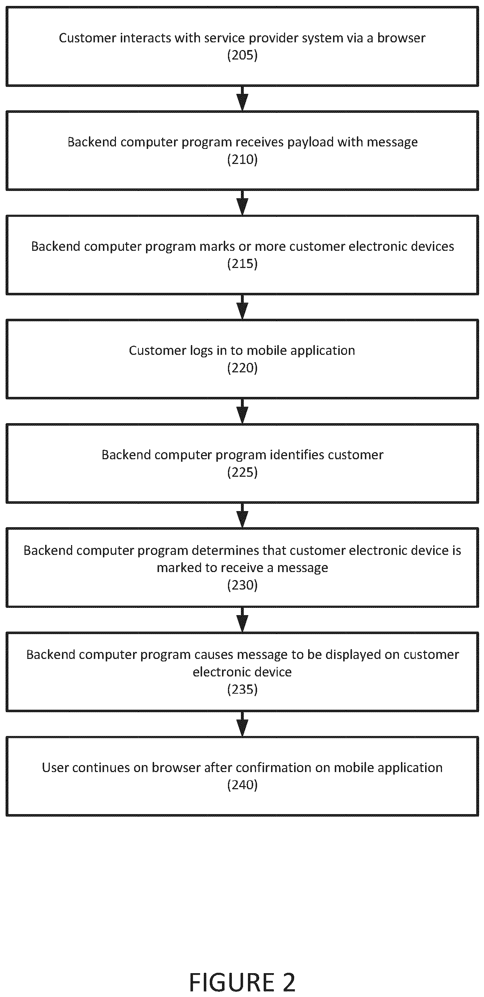

Referring to Figure 2, a method for pull notifications and interacting on both web and mobile channels is disclosed according to an embodiment.

In step 205, using a browser, a customer may interact with a service provider system in a customer journey that may require the customer to prove possession of the customer's mobile electronic device, or to take an action with the mobile electronic device (e.g., authenticate to a mobile application), tap a wireless card to the customer electronic device, provide identify verification (e.g., a selfie, an image of a driver's license or other identification), etc. An example of a service provider system may be a payment system.

In another embodiment, the customer may conduct a transaction with a partner merchant and may be presented with a message to log in to the mobile application to confirm the activity. For example, the customer may present a payment instrument to the partner merchant, and the service provider system may require the customer to confirm or approve the transaction using the mobile application.

In another embodiment, the customer may interact with a service provider agent via phone, SMS, in-person, etc. and the service provider agent may request that the customer log in to the mobile application to confirm the customer's identity.

In step 210, the backend computer program may receive a payload, such as a message, with customer and customer electronic device information, from the service provider system for future display to the customer. For example, the backend computer program may receive a customer identifier, a device identifier, etc. and may store the information in a database.

If not already assigned, the backend computer program may assign or associate a message identifier to the message.

In step 215, the backend computer program may mark one or more customer electronic device, including the customer mobile electronic device, to receive the message. For example, the backend computer program may retrieve an identification of registered customer electronic devices, and may mark one or more of them to receive the message. The customer electronic device(s) that are marked may be based on a trust level, such as a registration status, of the customer electronic device. The sensitivity of the message may also be considered.

In step 220, the customer may log in to a mobile application for the service provider, and in step 225, the backend computer program may identify the customer using the login information and may receive an identifier for the customer electronic device.

In step 230, the backend computer program may determine that that a message is required to be displayed to the customer. For example, the backend computer program may check to see if the customer electronic device has been marked to receive the message.

In step 230, the backend computer program may cause the message to be displayed within the mobile application. The backend computer program may then interact with the customer, for example, to confirm that the customer is taking an action (e.g., if the customer had initiated an action in the browser that raised a fraud concern, that the customer is interacting with a service provider agent, etc.). Any customer response may be provided to the system that requested the message to be presented to the customer.

In one embodiment, if the customer is interacting with a service provider agent, the customer may receive confirmation that the customer is in fact interacting with a service provider agent.

In another embodiment, each time that the customer logs into the mobile application, the backend computer program may check to see if any messages are required.

In step 235, the customer may continue interacting with the service provider system via the browser after confirmation.

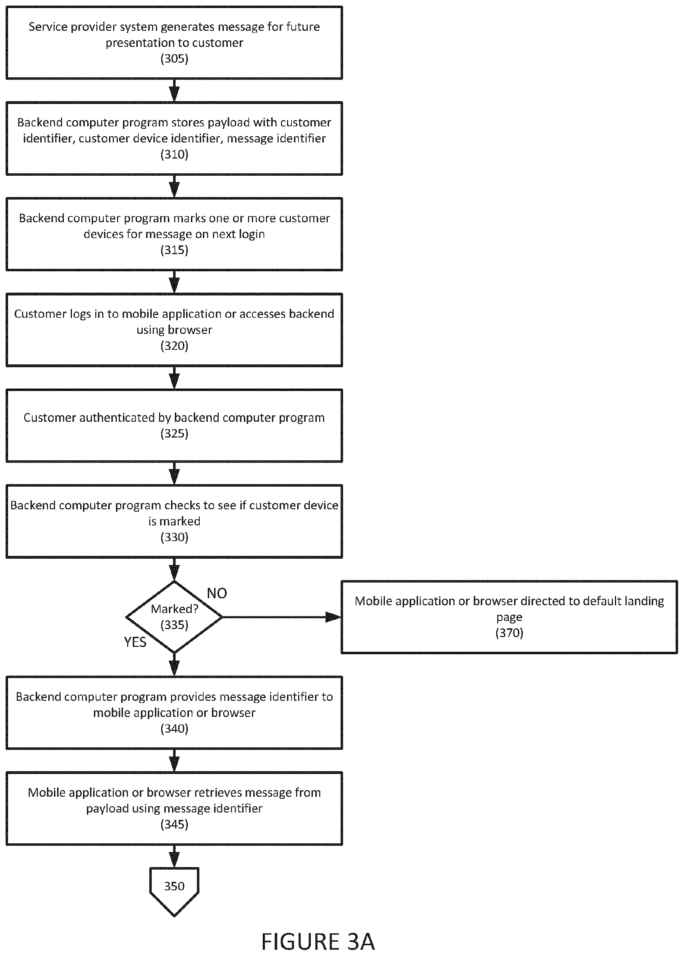

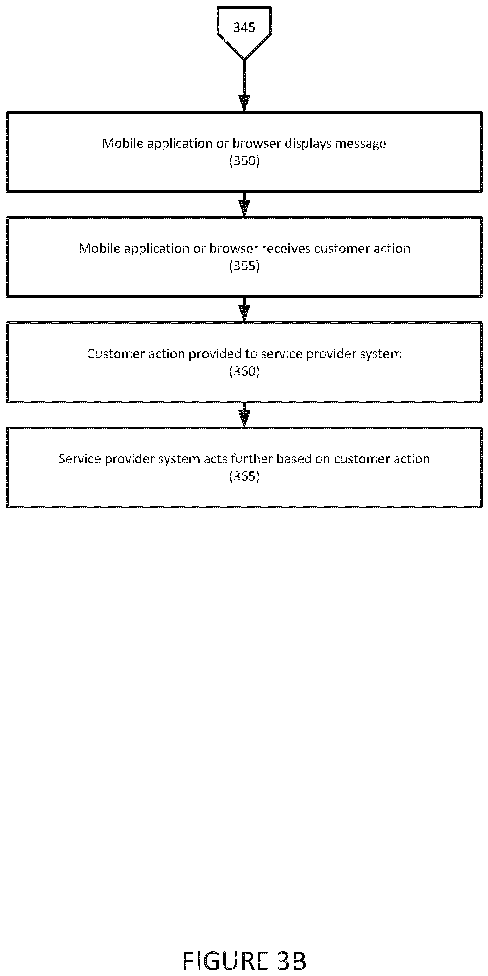

Referring to Figures 3A and 3B, a method for pull notifications and interacting on both web and mobile channels is disclosed according to another embodiment.

In step 305, a service provider system may generate a message for presentation to a customer. In one embodiment, the message may be any suitable message, such as message that may otherwise be pushed to the customer, such as for authentication, for confirmation or approval of a pending transaction, for confirmation that the customer is interacting with an agent, etc.

In step 310, a backend computer program may receive the message and may store a payload with a customer identifier, a customer electronic device identifier, and a message identifier for the message.

In step 315, the backend computer program may mark one or more customer electronic devices for the message on the next customer login. For example, the backend computer program may mark one or more of the customer's registered electronic devices that may use a mobile application, or it may mark a web browser, or it may mark both.

For example, the backend computer program may associate the customer electronic device(s) with an identifier, a flag, may add them to a list of devices, etc.

In step 320, the customer may log in to a mobile application or may log in to a backend computer program using a browser.

In step 325, the customer may be authenticated by the backend computer program. The backend computer program may also receive an identifier for the customer electronic device.

In step 330, the backend computer program may check to see if customer electronic device is marked.

In step 335, if the customer electronic device is not marked, in step 370, the mobile application or browser may be directed to a default landing page.

If the customer electronic device is marked, in step 340, the backend computer program may provide the message identifier for the message to the mobile application or browser.

In step 345, the mobile application or browser may retrieve the message using the message identifier, and in step 350, may display the message to the customer.

In step 355, if the message requires a response, the mobile application or browser may receive a customer action, such as confirmation of a transaction, step-up authentication, a tap of a wireless-enabled credit card, identify verification, etc.

In step 360, the backend computer program may provide the customer action to the service provider system, and in step 365, the service provider system may process further based on customer action. For example, the service provider system may authorize a transaction, may perform step-up authentication, may continue the interaction with the agent, etc.

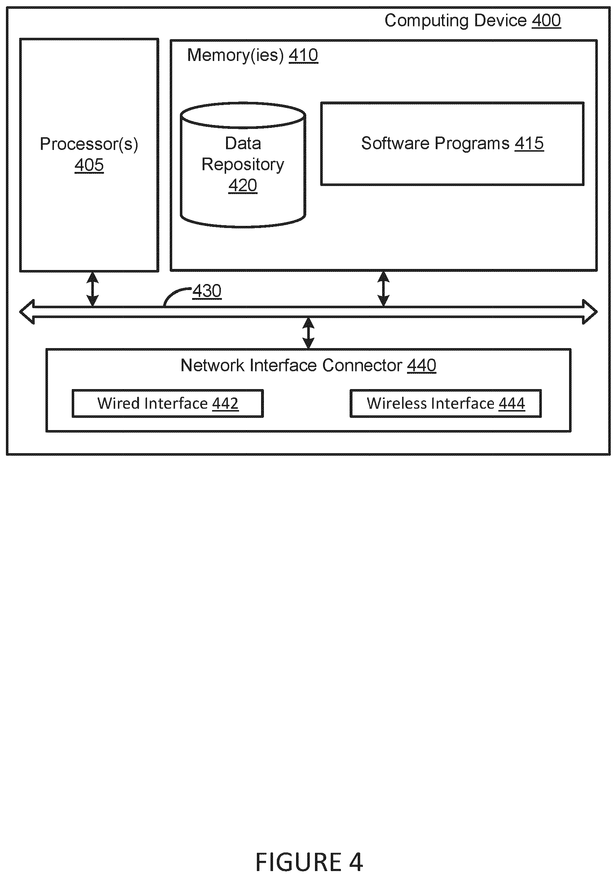

Figure 4 depicts an exemplary computing system for implementing aspects of the present disclosure. Figure 4 depicts exemplary computing device 400. Computing device 400 may represent the system components described herein. Computing device 400 may include processor 405 that may be coupled to memory 410. Memory 410 may include volatile memory. Processor 405 may execute computer-executable program code stored in memory 410, such as software programs 415. Software programs 415 may include one or more of the logical steps disclosed herein as a programmatic instruction, which may be executed by processor 405. Memory 410 may also include data repository 420, which may be nonvolatile memory for data persistence. Processor 405 and memory 410 may be coupled by bus 430. Bus 430 may also be coupled to one or more network interface connectors 440, such as wired network interface 442 or wireless network interface 444. Computing device 400 may also have user interface components, such as a screen for displaying graphical user interfaces and receiving input from the user, a mouse, a keyboard and/or other input/output components (not shown).

The disclosures of U.S. Provisional Patent Application Ser. No. 63/085,010 and U.S. Patent Application Ser. No. 17/487,808 are hereby incorporated, by reference, in their entities.

Hereinafter, general aspects of implementation of the systems and methods of embodiments will be described.

Embodiments of the system or portions of the system may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In one embodiment, the processing machine may be a specialized processor.

In one embodiment, the processing machine may be a cloud-based processing machine, a physical processing machine, or combinations thereof.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement embodiments may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA (Field-Programmable Gate Array), PLD (Programmable Logic Device), PLA (Programmable Logic Array), or PAL (Programmable Array Logic), or any other device or arrangement of devices that is capable of implementing the steps of the processes disclosed herein.

The processing machine used to implement embodiments may utilize a suitable operating system.

It is appreciated that in order to practice the method of the embodiments as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above, in accordance with a further embodiment, may be performed by a single component. Further, the processing performed by one distinct component as described above may be performed by two distinct components.

In a similar manner, the memory storage performed by two distinct memory portions as described above, in accordance with a further embodiment, may be performed by a single memory portion. Further, the memory storage performed by one distinct memory portion as described above may be performed by two memory portions.

Further, various technologies may be used to provide communication between the various processors and/or memories, as well as to allow the processors and/or the memories to communicate with any other entity; i.e., so as to obtain further instructions or to access and use remote memory stores, for example. Such technologies used to provide such communication might include a network, the Internet, Intranet, Extranet, a LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of embodiments. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of embodiments may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments. Also, the instructions and/or data used in the practice of embodiments may utilize any compression or encryption technique or algorithm, as may be desired. An encryption module might be used to encrypt data. Further, files or other data may be decrypted using a suitable decryption module, for example.

As described above, the embodiments may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in embodiments may take on any of a variety of physical forms or transmissions, for example. Illustratively, the medium may be in the form of a compact disc, a DVD, an integrated circuit, a hard disk, a floppy disk, an optical disc, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors.

Further, the memory or memories used in the processing machine that implements embodiments may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the systems and methods, a variety of "user interfaces" may be utilized to allow a user to interface with the processing machine or machines that are used to implement embodiments. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method, it is not necessary that a human user actually interact with a user interface used by the processing machine. Rather, it is also contemplated that the user interface might interact, i.e., convey and receive information, with another processing machine, rather than a human user. Accordingly, the other processing machine might be characterized as a user. Further, it is contemplated that a user interface utilized in the system and method may interact partially with another processing machine or processing machines, while also interacting partially with a human user.

It will be readily understood by those persons skilled in the art that embodiments are susceptible to broad utility and application. Many embodiments and adaptations of the present invention other than those herein described, as well as many variations, modifications and equivalent arrangements, will be apparent from or reasonably suggested by the foregoing description thereof, without departing from the substance or scope.

Accordingly, while the embodiments of the present invention have been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. A method, comprising:
receiving, by a backend computer program and from a service provider system, a message for customer;
storing, by the backend computer program, the message with a message identifier for the message;
marking, by the backend computer program, a customer electronic device associated with the customer to receive the message on a next customer login on the customer electronic device;
receiving, by the backend computer program and from a mobile application or a browser executed by the customer electronic device, a login from the customer;
authenticating, by the backend computer program, the customer;
confirming, by the backend computer program, that the customer electronic device is marked; and
providing, by the backend computer program, the message identifier to the mobile application or the browser;
wherein the mobile application or the browser is configured to retrieve the message using the message identifier and to display the message.

2. The method of claim 1, wherein the customer electronic device has a push notification feature disabled.

3. The method of claim 1, wherein the customer electronic device is registered to the customer with the backend computer program.

4. The method of claim 1, wherein a plurality of customer electronic devices that are registered to the customer are marked.

5. The method of claim 1, further comprising:
receiving, by the backend computer program and from the mobile application or the browser, a response to the message; and
executing, by the backend computer program, an action in response to receiving the response to the message.

6. The method of claim 5, wherein the response comprises approving a transaction, and the action comprises authorizing a transaction associated with the message.

7. The method of claim 5, wherein the response comprises authentication information, and the action comprises executing step-up authentication using the authentication information.

8. The method of claim 5, wherein the response comprises an identification document, and the action comprises verifying an identity of the customer.

9. A system, comprising:
a customer electronic device associated with a customer executing a browser and a mobile application;
a backend computer program executing a backend computer program; and
a service provider system;
wherein:
the service provider system is configured to generate a message for the customer and to provide the message to the backend computer program;
the backend computer program is configured to store the message with a message identifier for the message;
the backend computer program is configured to mark the customer electronic device associated with the customer to receive the message on a next customer login on the customer electronic device;
the backend computer program is configured to receive a login from the mobile application executed by the customer electronic device;
the backend computer program is configured to authenticate the customer;
the backend computer program is configured to confirm that the customer electronic device is marked;
the backend computer program is configured to provide the message identifier to the mobile application; and
the mobile application is configured to retrieve the message using the message identifier and to display the message.

10. The system of claim 9, wherein the customer electronic device has a push notification feature disabled.

11. The system of claim 9, wherein the customer electronic device is registered to the customer with the backend computer program.

12. The system of claim 9, wherein the backend computer program is configured to receive a response to the message from the mobile application or the browser; and
the backend computer program is configured to execute an action in response to receiving the response to the message.

13. The system of claim 12, wherein the response comprises approving a transaction, and the action comprises authorizing a transaction associated with the message.

14. The system of claim 12, wherein the response comprises authentication information, and the action comprises executing step-up authentication using the authentication information.

15. The system of claim 12, wherein the response comprises an identification document, and the action comprises verifying an identity of the customer.

16. A non-transitory computer readable storage medium, including instructions stored thereon, which when read and executed by one or more computer processors, cause the one or more computer processors to perform steps comprising:
receiving, from a service provider system, a message for customer;
storing the message with a message identifier for the message;
marking a customer electronic device that is registered to the customer to receive the message on a next customer login on the customer electronic device, wherein the customer electronic device has a push notification feature disabled;
receiving, from a mobile application or a browser executed by the customer electronic device, a login from the customer;
authenticating the customer;
confirming that the customer electronic device is marked; and
providing the message identifier to the mobile application or the browser;
wherein the mobile application or the browser is configured to retrieve the message using the message identifier and to display the message.

17. The non-transitory computer readable storage medium of claim 16, further including instructions stored thereon, which when read and executed by the one or more computer processors, cause the one or more computer processors to perform steps comprising:
receiving, from the mobile application or the browser, a response to the message; and
executing an action in response to receiving the response to the message.

18. The non-transitory computer readable storage medium of claim 17, wherein the response comprises approving a transaction, and the action comprises authorizing a transaction associated with the message.

19. The non-transitory computer readable storage medium of claim 17, wherein the response comprises authentication information, and the action comprises executing step-up authentication using the authentication information.

20. The non-transitory computer readable storage medium of claim 17, wherein the response comprises an identification document, and the action comprises verifying an identity of the customer.
